# NEUE EUROPÄISCHE PATENTSCHRIFT

(11) **EP 2 867 297 B2**
(45) Veröffentlichungstag und Bekanntmachung des Hinweises auf die Entscheidung über den Einspruch: **25.11.2020**
(45) Hinweis auf die Patenterteilung: 09.08.2017
(21) Anmeldenummer: 13732436.4
(22) Anmeldetag: 21.06.2013
(51) Int. Cl.: C08L 23/16, B32B 27/12, C08J 5/18

(54) **POLYMERBLEND UMFASSEND PROPYLEN-BASIERTES ELASTOMER UND POLYPROPYLEN RANDOM COPOLYMER**
POLYMER BLEND COMPRISING PROPYLENE-BASED ELASTOMER AND POLYPROPYLENE RANDOM COPOLYMER
MÉLANGE DE POLYMÈRES COMPOSÉ D'ÉLASTOMÈRE À BASE DE PROPYLÈNE ET DE COPOLYMÈRE RANDOMISÉE À BASE POLYPROPYLÈNE

(30) Priorität: 29.06.2012 EP 12174475
(43) Veröffentlichungstag der Anmeldung: 06.05.2015
(73) Patentinhaber: Sika Technology AG, 6340 Baar (CH)
(72) Erfinder: FREI, Fabian, CH-8049 Zürich (CH); SCHLÄPFER, Jean-Luc, CH-6064 Kerns (CH)
(74) Vertreter: Sika Patent Attorneys
(86) Internationale Anmeldenummer: PCT/EP2013/063056
(87) Internationale Veröffentlichungsnummer: WO 2014/001224

(56) Entgegenhaltungen:
- EP-A1- 2 186 634
- WO-A1-2008/019722
- WO-A1-2011/056861
- WO-A2-2006/023117
- US-A1- 2006 046 084

## Beschreibung

### Technisches Gebiet

Die vorliegende Erfindung betrifft das Gebiet von Polymer-Mischungen (Polymerblends) zur Herstellung von thermoplastischen Olefin-Dachfolien.

### Stand der Technik

Thermoplastische Olefinfolien finden ein breites Anwendungsgebiet in vielen Bereichen. In Abhängigkeit vom Anwendungsgebiet werden dabei besondere Kombinationen von Eigenschaften gefordert. So wird beispielsweise bei thermoplastischen Olefin-Dachfolien gefordert, dass eine hohe Flexibilität der Folien gleichzeitig mit einer guten mechanischen Stabilität bei erhöhten Temperaturen und einer hohen Witterungsbeständigkeit einhergeht. Aus dem Stand der Technik sind mehrere Vorschläge für solche thermoplastischen Olefinfolien bekannt.

So beschreibt die US 2006/046084 eine thermoplastische Polyolefin Roofing Membrane, die aus einer Mischung aus einem Polypropylen-basierten Elastomer (PBE) und Polyolefin Copolymeren hergestellt ist.

Die US 2010/255739 beschreibt eine Roofing Membran mit einer Zusammensetzung, die ein Propylen-basiertes Elastomer umfasst.

Die US 2010/197844 beschreibt eine thermoplastische Olefin Membran zum Einsatz in Baumaterialien, die ein Polypropylen-basiertes Elastomer umfasst.

Die aus dem Stand der Technik bekannten thermoplastischen Polyolefinfolien sind jedoch insbesondere bei Verwendung als Dachfolien in Bezug auf Ihre Kombination von mechanischen Eigenschaften noch nicht befriedigend.

Daneben sind aus dem Stand der Technik spezielle Reaktorblends, wie insbesondere das Material "Hifax" der Firma LyondellBasell, bekannt, die sich zwar durch gute mechanische Eigenschaften bei Verwendung als thermoplastische Polyolefin-Dachfolien auszeichnen, jedoch den Nachteil eines sehr hohen Preises haben.

Die bisherigen Bestrebungen, Materialien bereitzustellen, die solche Eigenschaften aufweisen, jedoch mit niedrigeren Kosten verbunden sind, haben nicht zum Erfolg geführt. Bei klassischen Ansätzen wird ein zumindest teilkristallines Polyolefinmaterial wie Polyethylen oder Polypropylen, welches die mechanische Festigkeit und Temperaturbeständigkeit bietet, mit einer flexiblen Blendkomponente gemischt. Diese flexible Blendkomponente muss mit dem Polyolefin mischbar oder zumindest verträglich sein. Flexible Blendkomponenten, die in den bisherigen Versuchen zum Einsatz gekommen sind, sind unter anderem Ethylen-Propylen-Dien-Kautschuk (EPDM), Ethylen-n-Alken-Copolymere und auch Polypropylen-basierte Elastomere. Die bisherigen Versuche in dieser Richtung haben sich jedoch nicht als erfolgreich erwiesen.

### Darstellung der Erfindung

Aufgabe der vorliegenden Erfindung ist es daher, Zusammensetzungen bereitzustellen, die bei Verarbeitung zu thermoplastischen Polyolefin-Dachfolien eine vorteilhafte Kombination von Eigenschaften in Bezug auf eine hohe Flexibilität, eine gute mechanische Stabilität bei erhöhten Temperaturen und eine hohe Witterungsbeständigkeit aufweisen und sich gleichzeitig gegenüber teuren Reaktorblends durch einen günstigeren Preis auszeichnen.

Überraschenderweise wurde gefunden, dass die Verwendung einer Zusammensetzung gemäß Anspruch 1 diese Aufgabe löst.

Bevorzugte Ausführungsformen finden sich in den abhängigen Ansprüchen.

### Wege zur Ausführung der Erfindung

Gegenstand der vorliegenden Erfindung ist eine Verwendung einer Zusammensetzung umfassend als Polymerbasis etwa 40 bis 75 Gew.-% mindestens eines Polypropylen-basierten Elastomers und etwa 25 bis 60 Gew.-% mindestens eines Polypropylen Random Copolymers, zur Herstellung von thermoplastischen Polyolefin-Dachfolien.

Es hat sich gezeigt, dass eine solche Zusammensetzung hervorragend geeignet ist, um thermoplastische Olefin-Dachfolien mit einer hervorragenden Kombination von mechanischen Eigenschaften herzustellen.

Im Sinne der vorliegenden Erfindung soll unter einem Polypropylen-basierten Elastomer ein Copolymer verstanden werden, dessen Hauptkomponente Propylen-Monomere enthält. Ferner enthält es mindestens ein weiteres Monomer, beispielsweise Ethylen oder andere alpha-Olefine, wobei Ethylen besonders bevorzugt ist. Vorzugsweise kommen Block- und/oder Pfropfcopolymerisate zum Einsatz.

Vorzugsweise weist das Polypropylen-basierte Elastomer eine Dichte von 0,85 bis 0,90 g/cm³, besonders bevorzugt von 0,86 bis 0,89 g/cm³ auf.

In einer bevorzugten Ausführungsform zeichnet sich das Polypropylen-basierte Elastomer durch eine geringe Kristallinität aus. Die Schmelzenthalpie ist vorzugsweise kleiner als 10 J/g, besonders bevorzugt kleiner als 6 J/g (bestimmt mit DSC bei einer Aufheizrate von 10 K/min, angelehnt an DIN ISO 11357).

Im Sinne der vorliegenden Erfindung soll unter einem Polypropylen Random Copolymer ein Copolymer verstanden werden, das Propylen als Hauptbestandteil und mindestens ein weiteres Monomer, beispielsweise Ethylen oder andere alpha-Olefine enthält, welche statistisch angeordnet sind. Der Einsatz von Ethylen als Copolymer ist besonders bevorzugt.

Ein besonderer Vorteil der Zusammensetzung besteht darin, dass kein besonderes Verfahren benötigt wird, um die Zusammensetzung herzustellen und zu verarbeiten, da es sich um einen gut verträglichen, physischen Polymerblend handelt, der in jeder Compoundiereinrichtung hergestellt werden kann.

Darüber hinaus hat sich überraschenderweise gezeigt, dass die Zusammensetzung gegenüber dem Stand der Technik dahingehend vorteilhaft ist, dass sie sich sehr flexibel an verschiedene Formulierungen und Füllstoffgehalte anpassen lässt, da sich die relativen Anteile der Bestandteile in einem weiten Bereich variieren lassen und eine Fülle von Zusatzstoffen zugesetzt werden können, ohne dass es zu Inkompatibilitäten kommt.

Es hat sich gezeigt, dass besonders gute Ergebnisse erzielt werden, wenn das Polypropylen-basierte Elastomer einen Ethylengehalt von etwa 5 Gew.-% oder mehr, vorzugsweise von etwa 9 Gew.-% oder mehr und insbesondere von etwa 11 Gew.-% oder mehr aufweist. Alternativ oder kumulativ dazu ist es bevorzugt wenn das Polypropylen-basierte Elastomer einen Ethylengehalt von etwa 20 Gew.-% oder weniger, insbesondere von etwa 18 Gew.-% oder weniger, und besonders bevorzugt von etwa 16 Gew.-% oder weniger aufweist. Besonders bevorzugte Bereiche des Ethylengehalts liegen bei etwa 5 bis 20 Gew.-%, insbesondere etwa 11 bis 16 Gew.-%.

Der Einsatz von Polypropylen-basierten Elastomeren mit einem Ethylengehalt von 15 bis 16 Gew.-%, dem höchsten kommerziell erhältlichen Ethylengehalt, ist am meisten bevorzugt, da hierdurch eine herausragende Flexibilität erzielt wird. Derartige Zusammensetzungen weisen bedingt durch ihren relativ hohen Ethylengehalt von 15 bzw. 16% einen niedrigen Biegemodul von etwa 11 MPa auf, wodurch sie zur hohen Flexibilität der Zusammensetzungen beitragen.

Es hat sich als vorteilhaft erwiesen, wenn das Polypropylen Random Copolymer so gewählt wird, dass es ein Copolymer mit einem Ethylengehalt von etwa 1 bis 10 Gew.-%, vorzugsweise etwa 2 bis 8 Gew.-% umfasst.

Besonders gute Ergebnisse werden erzielt, wenn als Polypropylen Random Copolymer ein Copolymer eingesetzt wird, das ein Biegemodul von unter etwa 700 MPa, vorzugsweise von unter etwa 650 MPa und insbesondere von unter etwa 600 MPa aufweist. Besonders geeignet ist ein Biegemodul von etwa 400 bis 600 MPa.

In Bezug auf das Polypropylen Random Copolymer hat es sich ferner als besonders vorteilhaft erwiesen, wenn das Polypropylen Random Copolymer ein heterophasiges Polypropylen Random Copolymer mit einem Biegemodul von etwa 500 MPa umfasst. Ein Biegemodul von 500 MPa ist für kommerziell erhältliche Polypropylen Random Copolymere vergleichsweise niedrig.

Von besonderer Bedeutung sind im Zusammenhang mit der Zusammensetzung auch die Mengenverhältnisse der als Polymerbasis eingesetzten Komponenten. Es hat sich gezeigt, dass besonders gute Ergebnisse erzielt werden, wenn die Zusammensetzung so ausgestaltet ist, dass die Zusammensetzung
- etwa 45 bis 70 Gew.-%, insbesondere etwa 50 bis 65 Gew.-% mindestens eines Polypropylen-basierten Elastomers und
- etwa 30 bis 55 Gew.-%, insbesondere etwa 35 bis 50 Gew.-% mindestens eines Polypropylen Random Copolymers umfasst.

Zusammensetzungen, bei denen die Mischungsverhältnisse weit außerhalb dieser Bereiche liegen (z. B. 80:20) bilden im Falle von nichtmischbaren Phasen eine sogenannte Sea-Island-Struktur aus, in der die mechanischen Eigenschaften der kontinuierlichen Phase dominieren. Dies führt zu einer Verschlechterung der mechanischen Stabilität und der Temperaturbeständigkeit. Bei Einhaltung der Mengenverhältnisse gemäß der erfindungsgemäßen Lehre bildet sich eine Co-kontinuierliche Phase aus, wodurch die wesentlichen Eigenschaften beider Komponenten der Zusammensetzung, also Flexibilität auf der einen Seite und mechanische Stabilität auf der anderen Seite, erhalten bleiben. Dies ist für die Eigenschaften der Zusammensetzung sehr vorteilhaft.

Vorzugsweise enthält die Polymerbasis der Zusammensetzung kein Plastomer. Ein Plastomer ist einem Ethylenbasiertes Copolymer, welches mit einem weiteren α-Olefin, beispielsweise Buten oder Octen, copolymerisiert ist.

Die Polymerbasis kann neben dem beschriebenen mindestens einen Polypropylen-basierten Elastomer und mindestens einen Polypropylen Random Copolymer weitere Polymere oder Copolymere enthalten, die keiner dieser Kategorien zuzuordnen sind. Solche Polymere sind beispielsweise Metallocen-Polyethylene oder Ethylen-Propylen-Kautschuke. Geeignete Metallocen-Polyethylene sind beispielsweise von DOW-Chemical als DOW Affinity 8150, 8200, 8280, oder ENR 8556 erhältlich. Geeignete Ethylen-Propylen-Kautschuke werden beispielsweise von Bayer als BUNA EP T2370P oder Exxon als Vistalon 919 vertrieben. Es ist jedoch bevorzugt, wenn solche weiteren Polymere maximal etwa 10 Gew.-%, insbesondere maximal etwa 5 Gew.-% der Polymerbasis ausmachen. Besonders bevorzugt besteht die Polymerbasis der Zusammensetzung lediglich aus mindestens einem Polypropylen-basiertes Elastomer und mindestens einem Polypropylen Random Copolymer.

Beide vorstehend genannten Ausführungsformen haben den Vorteil, dass die mechanischen Eigenschaften verbessert werden. Darüber hinaus können so die Herstellungskosten gesenkt werden.

Aufgrund der hohen Kompatibilität der Zusammensetzungen mit einer Vielzahl von Zusätzen lassen sich die Zusammensetzungen durch das Zumischen weiterer Bestandteile sehr leicht in ihrem Eigenschaftsprofil variieren. So können den Zusammensetzungen Flammschutzmittel beigefügt werden, wobei es besonders bevorzugt ist, dass die Zusammensetzung etwa 0 bis 60 Gew.-%, insbesondere etwa 20 bis 50 Gew.-%, stärker bevorzugt etwa 25 bis 40 Gew.-% eines Flammschutzmittels, insbesondere in Form von Aluminiumtrihydroxid, umfasst.

Weitere Bestandteile, die den Zusammensetzungen beigefügt werden können, sind beispielsweise UV-Stabilisatoren, Antioxidantien und/oder Farbpigmente.

In einer besonders bevorzugten Ausführungsform sind die Zusammensetzungen so ausgestaltet, dass die Zusammensetzung etwa 2 bis 10 Gew.-% mindestens eines UV-Stabilisators, insbesondere in Form von Titandioxid, etwa 0 bis 2 Gew.-% mindestens eines Antioxidants und/oder Lichtschutzmittels und/oder etwa 0,5 bis 2 Gew.-% eines Farbpigments, umfasst.

Die Zusammensetzung kann aufgrund der hohen Füllstofftoleranz als Polymerbasis für ungefüllte sowie hochgefüllte Formulierungen eingesetzt werden. Hochgefüllte Formulierungen finden beispielsweise bei flammgeschützten Dachfolien Anwendung.

Die aus den Zusammensetzungen hergestellten, thermoplastischen Polyolefin-Dachfolien zeichnen sich durch eine vorteilhafte Kombination von mechanischen Eigenschaften in Form von hoher Flexibilität bei gleichzeitig guter mechanischer Stabilität bei erhöhten Temperaturen und hoher Witterungsbeständigkeit aus.

Es hat sich gezeigt, dass Mischungen aus Polypropylen-basierten Elastomeren und Polypropylen Random Copolymeren zu sehr guten Ergebnissen führen, solange die erfindungsgemäßen Mengenverhältnisse eingehalten werden. Dabei müssen keine besonderen Vorkehrungen in Bezug auf das Verfahren zur Herstellung der Polymermischungen getroffen werden. Der Herstellungsprozess spielt eine untergeordnete Rolle, solange eine ausreichende Durchmischung der Blends sichergestellt wird. Durch Auswahl der Mischungskomponenten lässt sich allerdings durchaus eine Feineinstellung der gewünschten Eigenschaften erzielen. So führt der Einsatz von besonders flexiblen Polypropylen-basierten Elastomeren mit einem hohen Ethylengehalt zu einer Polymermischung mit besonders niedrigem Biegemodul, was zu einer besonders hohen Flexibilität von aus der Polymermischung hergestellten thermoplastischen Polyolefinfolien führt. Auch durch gezielte Auswahl des Polypropylen Random Copolymers lassen sich die Eigenschaften der Polymermischungen steuern.

Die erfindungsgemäße Lehre wird durch die nun folgenden Beispiele noch näher erläutert.

### Beispiele

### Beispiel 1

Tabelle 1 zeigt die mechanischen Eigenschaften der erfindungsgemäß verwendeten Zusammensetzungen und dem kommerziell erhältlichen Reaktorblend Hifax Ca 212 A. Das Biegemodul wurde gemäß ISO 178 gemessen.

Die Polymermischungen wurden auf einem handelsüblichen Walzwerk hergestellt. Die Walzentemperatur der vorderen Walze betrug 160°C, die der hinteren Walze 150°C. Die Drehzahl wurde variiert zwischen 10 und 40 Umdrehungen/min. Durch mehrmaliges Abziehen und Wiederauflegen der Polymermischung, sowie durch Friktion, welche durch eine Drehgeschwindigkeitsdifferenz zwischen vorderer und hinterer Walze erzeugt wurde, wurde eine gute Durchmischung der Blendkomponenten sichergestellt. Die gesamte Behandlungszeit lag bei ca. 10 min.

Die Ergebnisse der Messung sind in Tabelle 1 gezeigt.

Das erste Material zeigt einen Blend, welcher ein Polypropylen Random Copolymer und ein Polypropylenbasiertes Elastomer mit einem relativ niedrigeren Ethylengehalt enthält. Im zweiten Material wird das Polypropylen Random Copolymer gegen eine Polypropylen-Homopolymer ausgetauscht. Das dritte Material (Hifax Ca 212 A) stellt Stand der Technik dar. Das vierte Material zeigt einen Blend, welcher ein Polypropylen Random Copolymer und ein Polypropylen-basiertes Elastomer mit einem relativ hohen Ethylengehalt enthält.

Die erfindungsgemäß verwendete Materialkombination erreicht die Flexibilität des Standes der Technik bei einer Zusammensetzung von 50% Polypropylen Random Copolymer und 50% Propylen-basiertes Elastomer. Durch eine leichte Verschiebung der Blendkomponenten zum Vorteil des Polypropylen-basierten Elastomers wird die Flexibilität des Standes der Technik übertroffen bzw. das Biegemodul desselben unterschritten, was zu einem deutlichen Vorteil in der Anwendungstechnik führt.

**Tabelle 1**

| | **Material*** | **Anteil [%]** | **Biegemodul ISO 178 [MPa]** |
|---|---|---|---|
| 1. | Borsoft SD233CF | 50 | |
| | Vistamaxx 3980 | 50 | 497 |
| 2. | PP-Homopolymer | 50 | |
| | Vistamaxx 6202 | 50 | 197 |
| 3. | Hifax Ca 212 A | 100 | 80 |
| 4. | Borsoft SD233CF | 50 | |
| | Vistamaxx 6202 | 50 | 85.2 |

| | | | |
|---|---|---|---|
| * Borsoft SD233CF ist ein heterophasiges Polypropylen Random Copolymer mit einem Biegemodul von 500 MPa. Bei Vistamaxx 3980 handelt es sich um ein Polypropylen-basiertes Elastomer mit einem Ethylengehalt von etwa 8,5 Gew.-%. Vistamaxx 6202 ist ebenfalls ein Polypropylen-basiertes Elastomer, allerdings mit einem Ethylengehalt von etwa 15 bis 16 Gew.-%. | | | |

Die vierte Zusammensetzung besitzt überraschenderweise eine nahezu gleiche Flexibilität wie die bekannte Zusammensetzung (Hifax Ca 212 A).

### Beispiel 2

Zu Vergleichszwecken wurden die mechanischen Eigenschaften von erfindungsgemäß verwendeten Polymerzusammensetzungen bestimmt und mit dem Stand der Technik (Hifax CA 212 A) verglichen. Die Ergebnisse sind in Tabelle 2 dargestellt. Die Messwerte wurden ermittelt nach DIN 53504, Probekörper Typ S2, jeweils mindestens 3 Proben.

**Tabelle 2**

| **Material*** | **σ_{MAX} [MPa]** | **ε_{BREAK} [%]** | **σ_{MAX} (Std=1)** | **ε_{BREAK} (Std=1)** |
|---|---|---|---|---|
| Hifax CA 212 | 15.4 | 820 | 1 | 1 |
| A 50% Borsoft SD233CF, 50% Vistamaxx 6102 | 23.4 | 934 | 1.52 | 1.14 |
| 50% PP7054L1, 50% Vistamaxx 6102 | 7.4 | 320 | 0.32 | 0.34 |

| | | | | |
|---|---|---|---|---|
| * PP7054L1 ist ein Polypropylen Impact Copolymer. Bei Vistamaxx 6102 handelt es sich um einen Polypropylen-basiertes Elastomer mit einem Ethylengehalt von etwa 15 bis 16 Gew.-%. | | | | |

Wie die in Tabelle 2 gezeigten Messwerte deutlich zeigen, weist die erfindungsgemäß verwendeten Polymerzusammensetzung gegenüber Hifax CA 212 A (Stand der Technik) eine deutlich erhöhte mechanische Festigkeit auf.

Die dritte Zusammensetzung ist ein Blend aus Polypropylen-basiertem Elastomer und einem Polypropylen Impact Copolymer. Dieses zeigt eine deutliche Abnahme der mechanischen Festigkeit, was im Allgemeinen auf eine Unverträglichkeit der Polymere zurückzuführen ist. Überraschenderweise hat sich gezeigt, dass solche Unverträglichkeiten beim Einsatz der Zusammensetzung nicht vorkommen.

### Beispiel 3

Zur Herstellung einer 1,5 mm dicken Kunststoffbahn, bei der die Oberschicht und die Unterschicht unterschiedlich beschaffen sind, wurde aus den aus Tabelle 3 ersichtlichen Komponenten für die Unterschicht in einem Vertikal-Universalmischer eine Vormischung hergestellt.

**Tabelle 3**

| Rezeptur Oberseite | Gew.-% |
|---|---|
| Borsoft SD233CF | 45 |
| Vistamaxx 6102 | 45 |
| Pigmente: Titandioxid | 5 |
| Antioxidantien | 1 |
| Lichtschutzmittel | 1 |
| Füllstoff: Kreide | 3 |

Diese Vormischung wurde in einem gleichlaufenden Doppelschneckenextruder plastifiziert, homogen gemischt und über eine Breitschlitzdüse (Arbeitsbreite 0,3 m) extrudiert. Die Materialdosierung in den Extruder erfolgte über eine Differential-Dosierwaage. Die Temperatur der aus der Breitschlitzdüse austretenden bahnförmigen Masse betrug 180°C bis 220°C. Der Ausstoß lag bei 10 bis 15 kg pro Stunde. Diese bahnförmige Masse wurde von oben in den unteren Spalt eines 3-Walzen-Glättwerkes eingeführt. Gleichzeitig lief von unten über die untere Walze das Trägermaterial, ein Glasvlies mit einem Flächengewicht von 50 g/m² mit einer Geschwindigkeit von 0,9 m/Minute ein. Um eine vollständige Durchdringung des Trägermaterials zu erhalten, wurde mit Materialvorlage gefahren. Die Temperatur der unteren Walze betrug 120°C, diejenige der mittleren Walze 90°C. Über den Spalt zwischen der unteren und mittleren Walze wurde die Dicke der Bahn von 0,8 mm eingestellt. Anschließend wurde die Bahn über Kühlwalzen auf Raumtemperatur abgekühlt und aufgewickelt.

**Tabelle 4**

| Rezeptur Unterseite | Gew.-% |
|---|---|
| Borsoft SD233CF | 45 |
| Vistamaxx 6102 | 45 |
| Pigmente: Russ | 1 |
| Antioxidantien | 1 |
| Lichtschutzmittel | 1 |
| Füllstoff: Kreide | 7 |

In einem zweiten Arbeitsgang wurde die zweite Schicht mit den Komponenten für die Oberschicht mit der im ersten Arbeitsgang hergestellten Bahn untrennbar verschweißt. Das Vormischen, Plastifizieren, Homogenisieren und Extrudieren erfolgte in der gleichen Art und Weise wie oben beschrieben. Die aus der Breitschlitzdüse austretende bahnförmige Masse wurde in den unteren Spalt eines 3-Walzen-Glättwerkes eingeführt. Gleichzeitig lief von unten über die untere Walze die Bahn aus dem ersten Arbeitsgang ein, wobei das Trägermaterial auf die Seite mit der Materialvorlage gerichtet war. Die Temperatur der unteren Walze betrug 90°C, diejenige der mittleren Walze 90°C. Über den Spalt der unteren und mittleren Walze wurde die Dicke der Bahn von 1,5 mm eingestellt. Anschließend wurde diese Bahn über Kühlwalzen auf Raumtemperatur abgekühlt, die Ränder wurden geschnitten, und die Bahn wurde aufgerollt.

Die so erhaltene Bahn hatte die in Tabelle 5 aufgeführten Eigenschaften:

**Tabelle 5**

| Prüfung | Norm | Einheit | | Wert |
|---|---|---|---|---|
| Zugfestigkeit (23°C) | EN 12311-2 | N/mm² | längs | 14.6 |
| | | | quer | 10.6 |
| Bruchdehnung (23°C) | EN 12311-2 | N/mm² | längs | 714 |
| | | | quer | 659 |
| Zugfestigkeit (70°C) | EN 12311-2 | N/mm² | längs | 5.1 |
| | | | quer | 3.8 |
| Bruchdehnung (70°C) | EN 12311-2 | N/mm² | längs | 633 |
| | | | quer | 676 |
| Faltbiegung in der Kälte | EN 495-5 | °C | längs | -40 |
| | | | quer | -40 |
| Dimensionsstabilität | EN 1107-2 | % | längs | <0.1 |
| | | | quer | <0.1 |
| Widerstand gg. stossartige Belastung | EN 12691 | mm | Typ A | 1750 |

Gegenüber dem Stand der Technik zeigen diese Werte eine deutliche Verbesserung der mechanischen Eigenschaften. Die Flexibilität der Dachfolien entspricht dem Stand der Technik.

### Beispiel 4

Zur Herstellung einer 1,5 mm dicken Kunststoffbahn, bei der die Oberschicht und die Unterschicht unterschiedlich beschaffen sind, wurde aus den aus Tabelle 6 ersichtlichen Komponenten für die Unterschicht in einem Vertikal-Universalmischer eine Vormischung hergestellt:

**Tabelle 6**

| Rezeptur Oberseite | Gew.-% |
|---|---|
| Borsoft SD233CF | 35 |
| Vistamaxx 6102 | 27.5 |
| Vistamaxx 6202 | 27.5 |
| Pigmente: Titandioxid | 5 |
| Antioxidantien | 1 |
| Lichtschutzmittel | 1 |
| Füllstoff: Kreide | 3 |

Diese Vormischung wurde in einem gleichlaufenden Doppelschneckenextruder plastifiziert, homogen gemischt und über eine Breitschlitzdüse (Arbeitsbreite 0,3 m) extrudiert. Die Materialdosierung in den Extruder erfolgte über eine Differential-Dosierwaage. Die Temperatur der aus der Breitschlitzdüse austretenden bahnförmigen Masse betrug 180°C bis 220°C. Der Ausstoß lag bei 10 bis 15 kg pro Stunde. Diese bahnförmige Masse wurde von oben in den unteren Spalt eines 3-Walzen-Glättwerkes eingeführt. Gleichzeitig lief von unten über die untere Walze das Trägermaterial, ein Glasvlies mit einem Flächengewicht von 50 g/m² mit einer Geschwindigkeit von 0,9 m/Minute ein. Um eine vollständige Durchdringung des Trägermaterials zu erhalten, wurde mit Materialvorlage gefahren. Die Temperatur der unteren Walze betrug 120°C, diejenige der mittleren Walze 90°C. Über den Spalt zwischen der unteren und mittleren Walze wurde die Dicke der Bahn von 0,8 mm eingestellt. Anschließend wurde die Bahn über Kühlwalzen auf Raumtemperatur abgekühlt und aufgewickelt.

**Tabelle 7**

| Rezeptur Unterseite | Gew.-% |
|---|---|
| Borsoft SD233CF | 35 |
| Vistamaxx 6102 | 27.5 |
| Vistamaxx 6202 | 27.5 |
| Pigmente: Russ | 1 |
| Antioxidantien | 1 |
| Lichtschutzmittel | 1 |
| Füllstoff: Kreide | 7 |

In einem zweiten Arbeitsgang wurde die zweite Schicht mit den Komponenten für die Oberschicht mit der im ersten Arbeitsgang hergestellten Bahn untrennbar verschweißt. Das Vormischen, Plastifizieren, Homogenisieren und Extrudieren erfolgte in der gleichen Art und Weise wie oben beschrieben. Die aus der Breitschlitzdüse austretende bahnförmige Masse wurde in den unteren Spalt eines 3-Walzen-Glättwerkes eingeführt. Gleichzeitig lief von unten über die untere Walze die Bahn aus dem ersten Arbeitsgang ein, wobei das Trägermaterial auf die Seite mit der Materialvorlage gerichtet war. Die Temperatur der unteren Walze betrug 90°C, diejenige der mittleren Walze 90°C. Über den Spalt der unteren und mittleren Walze wurde die Dicke der Bahn von 1,5 mm eingestellt. Anschließend wurde diese Bahn über Kühlwalzen auf Raumtemperatur abgekühlt, die Ränder wurden geschnitten, und die Bahn wurde aufgerollt.

Die so erhaltene Bahn hatte die in Tabelle 8 aufgeführten Eigenschaften.

**Tabelle 8**

| Prüfung | Norm | Einheit | | Wert |
|---|---|---|---|---|
| Zugfestigkeit (23°C) | EN 12311-2 | N/mm² | längs | 12.3 |
| | | | quer | 11.2 |
| Bruchdehnung (23°C) | EN 12311-2 | N/mm² | längs | 758 |
| | | | quer | 801 |
| Zugfestigkeit (70°C) | EN 12311-2 | N/mm² | längs | 3.3 |
| | | | quer | 2.2 |
| Bruchdehnung (70°C) | EN 12311-2 | N/mm² | längs | 686 |
| | | | quer | 709 |
| Faltbiegung in der Kälte | EN 495-5 | °C | längs | -40 |
| | | | quer | -40 |
| Dimensionsstabilität | EN 1107-2 | % | längs | <0.1 |
| | | | quer | <0.1 |
| Widerstand gg. stossartige Belastung | EN 12691 | mm | Typ A | 1750 |

Im Vergleich zu Beispiel 3 sind die mechanischen Festigkeiten, die mit einer Dachfolie gemäß Beispiel 4 erzielt werden, geringfügig niedriger, jedoch immer noch im Bereich des Standes der Technik. Der Vorteil der Dachfolie nach Beispiel 4 liegt in der deutlich gesteigerten Flexibilität, welche in der Anwendung erhebliche Vorteile bringt.

Die Flexibilität wurde mit einem Torsionspendel vom Typ "Myrenne ATM3" im Torsionspendelversuch nach DIN EN ISO 6721-1 mit folgenden Parametern bestimmt:
Aufheizrate 1 K / min, Frequenz 1 Hz, Auslenkwinkel ca. 1°, Messlänge 50 mm, Messbreite 10 mm, Probemasse 60 x 10 mm.

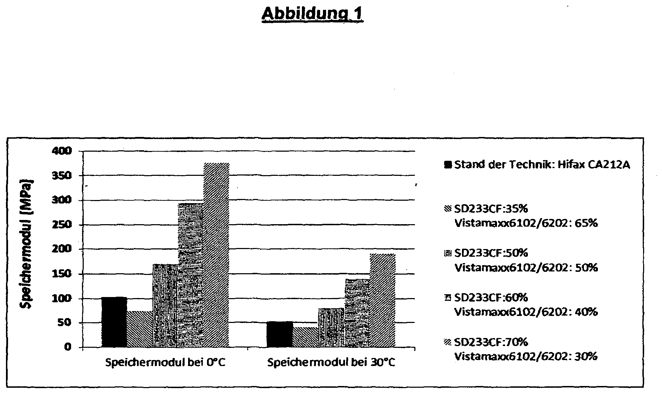

Abbildung 1 zeigt das Speichermodul G' [MPa] von verschiedenen Versuchs - Dachfolien mit identischem Aufbau, jedoch einer unterschiedlichen Polymerbasis. Es wurde jeweils das Verhältnis von Polypropylen-basiertem Elastomer und Polypropylen Random Copolymer verändert. Es wird deutlich, dass bei einem Verhältnis von 65% PP basiertem Elastomer (Vistamaxx) und entsprechend 35% PP Random Copolymer (SD233CF) ein flexiblerer Blend als der Stand der Technik erreicht wird. Die Ausführung "50% PP basiertes Elastomer (Vistamaxx) und 50% Polypropylen Random Copolymer (SD233CF)" weist deutlich höhere mechanische Belastbarkeit bei annähernd gleicher Flexibilität im Vergleich zu einer Dachfolie gemäß Stand der Technik auf.

## Patentansprüche

1. Verwendung einer Zusammensetzung, umfassend als Polymerbasis
- 40 bis 75 Gew.-% mindestens eines Polypropylen-basierten Elastomers mit einem Ethylen-Gehalt von 9 Gew.-% oder mehr und
- 25 bis 60 Gew.-% mindestens eines Polypropylen Random Copolymers mit einem Biegemodul von unter 650 MPa, zur Herstellung von thermoplastischen Polyolefin-Dachfolien.

2. Verwendung gemäß Anspruch 1, **dadurch gekennzeichnet, dass** das mindestens eine Polypropylen-basierte Elastomer einen Ethylengehalt von 11 bis 20 Gew.-%, insbesondere von 11 bis 16 Gew.-% umfasst.

3. Verwendung gemäß Anspruch 1 oder 2, **dadurch gekennzeichnet, dass** das mindestens eine Polypropylen-basierte Elastomer ein Copolymer umfasst, das Propylen-Monomere als Hauptkomponente und mindestens ein weiteres Monomer enthält.

4. Verwendung nach mindestens einem der vorhergehenden Ansprüche, **dadurch gekennzeichnet, dass** das mindestens eine Polypropylen-basierte Elastomer eine Dichte von 0,85 bis 0,90 g/cm³, vorzugsweise von 0,86 bis 0,89 g/cm³ aufweist.

5. Verwendung nach mindestens einem der vorhergehenden Ansprüche, **dadurch gekennzeichnet, dass** das mindestens eine Polypropylen-basierte Elastomer eine Schmelzenthalpie von kleiner als 10 J/g, vorzugsweise von kleiner als 6 J/g aufweist.

6. Verwendung nach mindestens einem der vorhergehenden Ansprüche, **dadurch gekennzeichnet, dass** das mindestens eine Polypropylen Random Copolymer ein Copolymer mit einem Biegemodul von unter 600 MPa umfasst.

7. Verwendung nach mindestens einem der vorhergehenden Ansprüche, **dadurch gekennzeichnet, dass** das mindestens eine Polypropylen Random Copolymer ein heterophasiges Polypropylen Random Copolymer, vorzugsweise mit einem Biegemodul von 500 MPa umfasst.

8. Verwendung nach mindestens einem der vorhergehenden Ansprüche, **dadurch gekennzeichnet, dass** die Zusammensetzung
- 45 bis 70 Gew.-%, insbesondere 50 bis 65 Gew.-% mindestens eines Polypropylen-basierten Elastomers und
- 30 bis 55 Gew.-%, insbesondere 35 bis 50 Gew.-% mindestens eines Polypropylen Random Copolymers umfasst.

9. Verwendung nach mindestens einem der vorhergehenden Ansprüche, **dadurch gekennzeichnet, dass** die Polymerbasis der Zusammensetzung kein Plastomer enthält.

10. Verwendung nach mindestens einem der vorhergehenden Ansprüche, **dadurch gekennzeichnet, dass** die Polymerbasis der Zusammensetzung aus mindestens einem Polypropylen-basierten Elastomer und mindestens einem Polypropylen Random Copolymer besteht.

11. Verwendung nach mindestens einem der vorhergehenden Ansprüche, **dadurch gekennzeichnet, dass** die Zusammensetzung ein Flammschutzmittel umfasst.

12. Verwendung nach mindestens einem der vorhergehenden Ansprüche, **dadurch gekennzeichnet, dass** die Zusammensetzung 0 bis 60 Gew.-%, insbesondere 20 bis 50 Gew.-%, stärker bevorzugt 25 bis 40 Gew.-% eines Flammschutzmittels, insbesondere in Form von Aluminiumtrihydroxid, umfasst.

## Claims

1. Use of a composition comprising as polymer basis
- 40 to 75% by weight of at least one polypropylene-based elastomer having an ethylene content of 9% by weight or more and
- 25 to 60% by weight of at least one random polypropylene copolymer having a flexural modulus of less than 650 MPa for the production of thermoplastic polyolefin roofing membranes.

2. Use according to Claim 1, **characterized in that** the at least one polypropylene-based elastomer comprises 11 to 20% by weight ethylene content, in particular 11 to 16% by weight.

3. Use according to Claim 1 or 2, **characterized in that** the at least one polypropylene-based elastomer comprises a copolymer which comprises propylene monomers as main component and at least one other monomer.

4. Use according to at least one of the preceding claims, **characterized in that** the density of the at least one polypropylene-based elastomer is from 0.85 to 0.90 g/cm³, preferably from 0.86 to 0.89 g/cm³.

5. Use according to at least one of the preceding claims, **characterized in that** the enthalpy of fusion of the at least one polypropylene-based elastomer is less than 10 J/g, preferably less than 6 J/g.

6. Use according to at least one of the preceding claims, **characterized in that** the at least one random polypropylene copolymer comprises a copolymer with a flexural modulus of less than 600 MPa.

7. Use according to at least one of the preceding claims, **characterized in that** the at least one random polypropylene copolymer comprises a heterophasic random polypropylene copolymer, preferably with a flexural modulus of 500 MPa.

8. Use according to at least one of the preceding claims, **characterized in that** the composition comprises
- 45 to 70% by weight, in particular 50 to 65% by weight, of at least one polypropylene-based elastomer and
- 30 to 55% by weight, in particular 35 to 50% by weight, of at least one random polypropylene copolymer.

9. Use according to at least one of the preceding claims, **characterized in that** the polymer basis of the composition comprises no plastomer.

10. Use according to at least one of the preceding claims, **characterized in that** the polymer basis of the composition consists of at least one polypropylene-based elastomer and of at least one random polypropylene copolymer.

11. Use according to at least one of the preceding claims, **characterized in that** the composition comprises a flame retardant.

12. Use according to at least one of the preceding claims, **characterized in that** the composition comprises 0 to 60% by weight of a flame retardant, in particular in the form of aluminium trihydroxide, in particular 20 to 50% by weight, more preferably 25 to 40% by weight.

## Revendications

1. Utilisation d'une composition, comprenant en tant que base polymère
- 40 à 75 % en poids d'au moins un élastomère à base de polypropylène, ayant une teneur en éthylène de 9 % en poids ou plus et
- 25 à 60 % en poids d'au moins un copolymère statistique de polypropylène, ayant un module de flexion inférieur à 650 MPa, pour la fabrication de revêtements de toit de polyoléfines thermoplastiques.

2. Utilisation selon la revendication 1, **caractérisée en ce que** l'au moins un élastomère à base de polypropylène comprend une teneur en éthylène de 11 à 20 % en poids, en particulier de 11 à 16 % en poids.

3. Utilisation selon la revendication 1 ou 2, **caractérisée en ce que** l'au moins un élastomère à base de polypropylène comprend un copolymère qui contient des monomères de propylène en tant que composant principal et au moins un autre monomère.

4. Utilisation selon au moins l'une quelconque des revendications précédentes, **caractérisée en ce que** l'au moins un élastomère à base de polypropylène présente une densité de 0,85 à 0,90 g/cm³, de préférence de 0,86 à 0,89 g/cm³.

5. Utilisation selon au moins l'une quelconque des revendications précédentes, **caractérisée en ce que** l'au moins un élastomère à base de polypropylène présente une enthalpie de fusion inférieure à 10 J/g, de préférence inférieure à 6 J/g.

6. Utilisation selon au moins l'une quelconque des revendications précédentes, **caractérisée en ce que** l'au moins un copolymère statistique de polypropylène comprend un copolymère ayant un module de flexion inférieur à 600 MPa.

7. Utilisation selon au moins l'une quelconque des revendications précédentes, **caractérisée en ce que** l'au moins un copolymère statistique de polypropylène comprend un copolymère statistique de polypropylène hétérophasique, de préférence ayant un module de flexion de 500 MPa.

8. Utilisation selon au moins l'une quelconque des revendications précédentes, **caractérisée en ce que** la composition comprend
- 45 à 70 % en poids, en particulier 50 à 65 % en poids d'au moins un élastomère à base de polypropylène et
- 30 à 55 % en poids, en particulier 35 à 50 % en poids d'au moins un copolymère statistique de polypropylène.

9. Utilisation selon au moins l'une quelconque des revendications précédentes, **caractérisée en ce que** la base polymère de la composition ne contient pas de plastomère.

10. Utilisation selon au moins l'une quelconque des revendications précédentes, **caractérisée en ce que** la base polymère de la composition est constituée d'au moins un élastomère à base de polypropylène et d'au moins un copolymère statistique de polypropylène.

11. Utilisation selon au moins l'une quelconque des revendications précédentes, **caractérisée en ce que** la composition comprend un agent ignifuge.

12. Utilisation selon au moins l'une quelconque des revendications précédentes, **caractérisée en ce que** la composition comprend 0 à 60 % en poids, en particulier 20 à 50 % en poids, de façon plus particulièrement préférée 25 à 40 % en poids d'un agent ignifuge, en particulier sous forme de trihydroxyde d'aluminium.
